# EUROPEAN PATENT APPLICATION

(11) **EP 2 323 443 A1**
(43) Date of publication of application: **18.05.2011**
(21) Application number: 09176119.7
(22) Date of filing: 16.11.2009
(51) Int. Cl.: H04W 48/10

(54) **Method for transmitting beacon services in an area covered by several radio access technologies**

(71) Applicant: NEC Corporation, Minato-ku Tokyo 108-8001 (JP)
(72) Inventor: Zappulla, Fabrice, 95600 Eaubonne (FR); Marchand, Pierre, 75009 Paris (FR)
(74) Representative: Ilgart, Jean-Christophe

(57) **Abstract**

The invention concerns a method for optimally transmitting beacon services to User Equipments (UE's) (4) roaming in an area covered by several Radio Access Technologies (RAT's) using several frequencies, said area comprising a plurality of geographical zones, each zone being covered by at least one RAT among said plurality of RAT's and each User Equipment (UE) (4) having various RAT capabilities and preferences and supporting several frequencies,
said method comprises the following steps:
- transmitting in said area first beacon messages comprising information about all the RAT's deployed in said area and about all the frequencies used in said area (, and second beacon messages comprising data to be used by a UE in the geographical zone where it is located in order to select a particular RAT and/or a particular frequency actually available in said geographical zone,
- upon receiving said first and said second beacon messages, said UE runs a predefined procedure using said beacon messages and the data of one of said second beacon messages to select said particular RAT and/or said particular frequency for receiving said beacon services in the geographical zone where it is located.

## Description

### TECHNICAL DOMAIN

The invention pertains to telecommunication field and concerns a method for transmitting beacon services to User Equipments (UE's) roaming in an area covered by several Radio Access Technologies (RAT's) using several frequencies, said area comprising a plurality of geographical zones, each zone being covered by at least one RAT among said plurality of RAT's and each User Equipment (UE) having various RAT capabilities and preferences and supporting several frequencies.

The invention also concerns a base station for transmitting services to User Equipments (UE's) in an area covered by several Radio Access Technologies (RAT's) using several frequencies, said area comprising a plurality of geographical zones, each zone being covered by at least one RAT among said plurality of RAT's and each User Equipment (UE) having various RAT capabilities and preferences and supporting several frequencies.

The invention further concerns a User Equipment (UE) having various RAT capabilities and preferences for receiving beacon services transmitted by a base station in an area covered by several Radio Access Technologies (RAT's) using several frequencies, said area comprising a plurality of geographical zones, each zone being covered by at least one RAT among said plurality of RAT's, said User Equipment (UE) having various RAT capabilities and preferences and supporting several frequencies.

### STATE OF PRIOR ART

A user roaming in an area covered by several telecommunication networks may choose an operator, a RAT (Radio Access Technology), and/or a frequency of communication based on roaming agreements between operators in this area and on the capabilities and preferences of its User Equipment (UE).

Cognitive Pilot Channel (CPC) is a kind of Beacon channel that may be used in cognitive radio to provide information to cognitive mobiles about the available operators, Radio Access Technologies (RAT) and Frequencies available in said geographical area.

Two Major concepts for Cognitive Pilot Channel are proposed by the E3 project and ETSI RRS Group: Mesh based and Optimized broadcast approach.
- In Mesh based concept, a cell in the geographical area is divided into a plurality of meshes and information is provided about operators, RAT and Frequencies available in each mesh.
- In Optimized broadcast concept, information about all the RATs and frequencies available in the cells is broadcast in said geographical area.

Although Mesh based concept is more precise than Optimized broadcast concept, it presents a drawback resulting from the fact that the transmission of information to the meshes requires a larger frequency band to be allocated to CPC.

One of the proposed methods to reduce the CPC data rate is to transmit the same CPC for the whole cell, not to meshes of said cell, and transmit the coverage area for each technology and frequency. The problem with this kind of approach is that coverage areas are not easily characterized and transmitting a detailed coverage area may result in a large data-rate as well.

The present invention aims at significantly reducing the size of the CPC message in the mesh based case.

The invention also aims at improving the UE's power saving by optimizing the UE's radio use.

### PRESENTATION OF THE INVENTION

The invention is based on the idea of transmitting messages to UE (s) roaming in a geographical area covered by several Radio Access Technologies (RAT's) using several frequencies to indicate to said UEs the RAT's and the frequencies available in said area.

The message consist of structural messages carrying information on all RATs and all frequencies available in said geographical area, and temporal messages carrying digital data allowing a terminal located in a given geographical zone of that geographical area to determine, from the structural messages, the rat and/or frequency available in that given geographical zone.

The structural messages depend of the network deployment in said area and the temporal messages depend of the network load.

The object of the invention is achieved by means of a method for optimally transmitting beacon services to User Equipments (UE's) roaming in an area covered by several Radio Access Technologies (RAT's) using several frequencies, said area comprising a plurality of geographical zones, each zone being covered by at least one RAT among said plurality of RAT's and each User Equipment (UE) having various RAT capabilities and preferences and supporting several frequencies.
said method comprising the following steps:
- transmitting in said area first beacon messages comprising information about all the RAT's deployed in said area and about all the frequencies used in said area, and second beacon messages comprising data to be used by a UE in the geographical zone where it is located in order to select a particular RAT and/or a particular frequency actually available in said geographical zone,
- Upon receiving said first and said second beacon messages, said UE runs a predefined procedure using said beacon messages and the data of one of said second beacon messages to select said particular RAT and/or said particular frequency for receiving said broadcast services in the geographical zone where it is located.

In a particular context of implementation of the invention, said plurality of geographical zones consist of a plurality of meshes, and said first beacon message and said second beacon message are transmitted over a CPC (Cognitive Pilot Channel) channel.

According to a preferred embodiment of the invention, each of said first beacon messages and each of said second beacon messages consists of data parquet comprising n successive fields, and each field i (i= 1 to n) of each first beacon message contains an identifier of a particular RAT or a value of a particular frequency available in the area covered by the CPC channel, and each field i (i= 1 to n) of each second beacon message contains a data used to indicate to the UE located in a given mesh whether or not the i^{th} particular RAT or the i^{th} particular frequency is available in said given mesh.

It is to be noted that content of the first beacon messages depends on the RAT's deployed in said area and about all the frequencies used in said area, and the data of each field of said second beacon message depends on RAT's and frequencies available in the meshes of said area.

In a preferred embodiment of the invention, said data consist of a bit.
each second beacon message comprises an indication of the geographical position of each mesh in the area covered by the CPC channel.

In normal operation, a UE located in a mesh of said geographical area utilizes a RAT and a frequency available in said mesh and listens to the first and second beacon messages in order to switch, where appropriate, to a better RAT and/or to a better frequency. The switching should be made automatically and transparently to the user.

To this end, a procedure is pre-programmed in the UE for detecting the second beacon message containing data relating to the mesh where it is currently located.

In a first variant, said procedure consists of indicating in a specific field of each second beacon message, a parameter used by the UE for identifying the mesh concerned by the data currently transmitted. Said field is constantly scanned by each UE.

Said parameter may be the geographical position of said mesh in the roaming area.

In a second variant, said procedure is a transmission policy pre-programmed in the EU to allow said UE to detect the transmission timing of the second beacon message containing data relating to the mesh where it is currently located.

With this procedure, the UE detects the transmission instant t_{c} of the second beacon message containing data relating to the mesh where it is currently located by comparing its current position with the position of a mesh concerned with a second beacon message previously transmitted.

In both variant, the UE equipment decodes the second beacon message containing data relating to the mesh where it is currently located, stores said data for filtering the content of the first beacon message by means of said data in order to select a new RAT and/or a new frequency in said mesh.

### BRIEF DESCRIPTION OF THE FIGURES

The forgoing summary, as well as the following detailed description, will be better understood when read in conjunction with the appended figures illustrating an exemplary embodiment of the invention in which:
- figure 1 schematically represents a general flow chart illustrating beacon messages generating and transmission steps according to the invention;
- figure 2 schematically illustrates a first beacon channel message structure according to the invention;
- figure 3 schematically illustrates a second beacon channel message structure according to the invention;
- figure 4 schematically illustrates a first example of structure of a geographical area where the method according to the invention is implemented.
- figure 5 schematically illustrates a second example of structure of a geographical area;
- figure 6 is flow chart illustrating beacon messages reception according to the invention.

### DESCRIPTION OF A DETAILED EMBODIMENT OF THE INVENTION

The invention will be described when implemented in a geographical area divided into a number n of contiguous elementary meshes covered by a plurality of wireless telecommunication networks and in which a CPC station transmits information on operators, Radio Access technologies (RATs) and radio frequencies available in said geographical area to cognitive UEs such as mobile phones, PDA, or laptops to allow said UEs to choose the most convenient operator, RAT and frequency available in said geographical area.

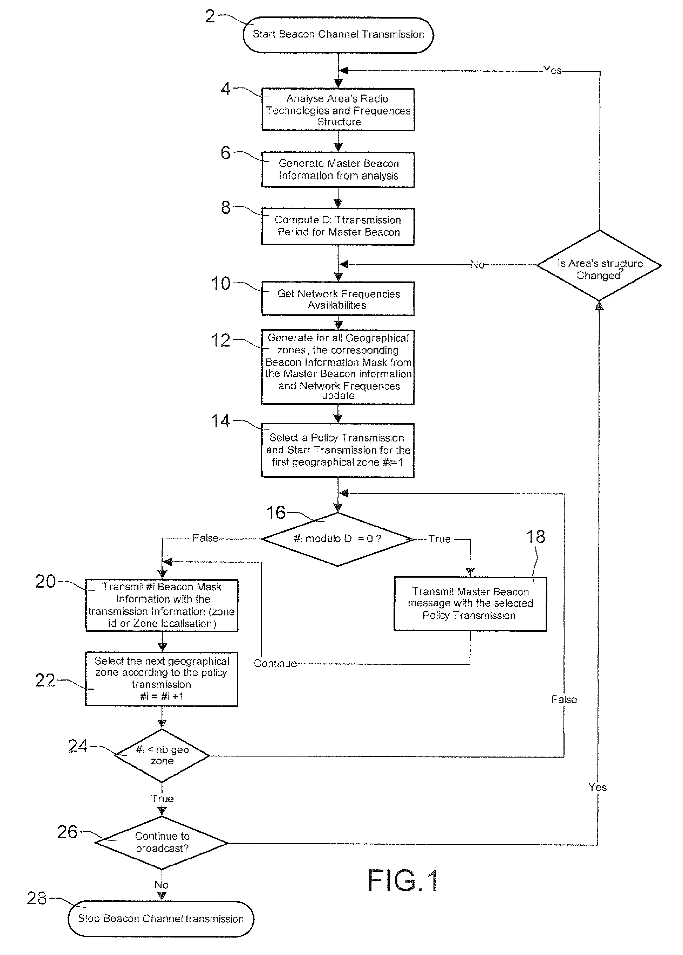

Figure 1 illustrates the steps of the generation of CPC information by the CPC station and transmission of said CPC information to the meshes defined in the geographical area covered by the wireless telecommunication networks.

At step 2, the CPC station starts CPC Channel transmission in the geographical area.

At step 4, the CPC station determines the RATs and the frequencies available in the geographical area covered by the wireless telecommunication networks through analysis of messages received from base stations of said networks.

At step 6, the CPC station generates, from the analysis of step 4, first Beacon message comprising information about all the operators and all the RAT's and frequencies deployed in said geographical area.

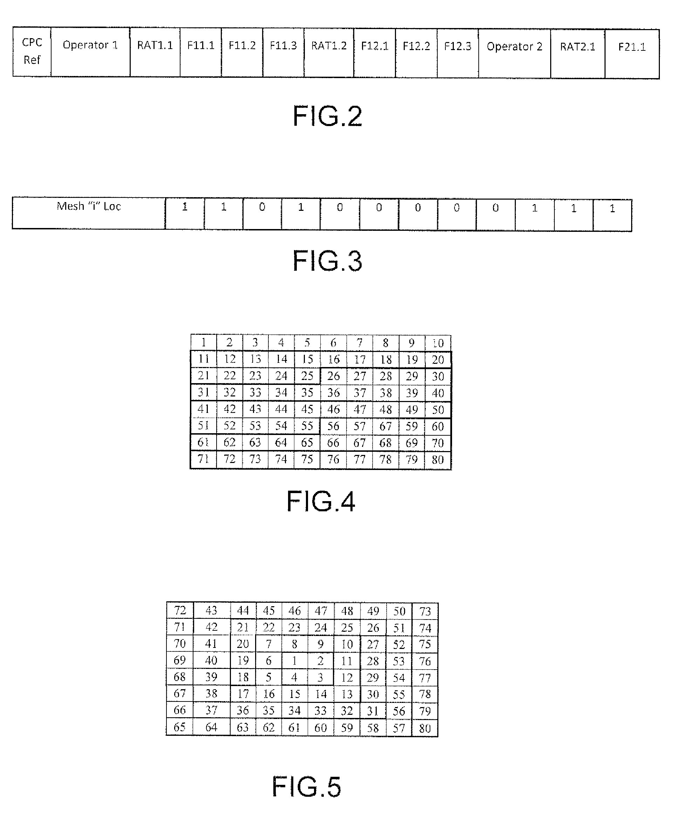

Figure 2 illustrates an example of such first Beacon message comprising a first field 7 comprising an identifier of the CPC message and a set of twelve successive fields each of them comprising an identifier of a RAT or a frequency deployed in the geographical area. In the example of figure 2, the first Beacon message indicates that two operators are present in the geographical area, respectively operator 1 and operator 2. Operator 1 uses a first Radio access technology RAT1.1 with tree frequencies F11.1, F11.2 and F11.3, and a second Radio access technology RAT1.2 with tree frequencies F12.1, F12.2 and F12.3. Operator 2 uses a unique Radio access technology RAT2.1 with a unique frequency F21.1.

Returning to figure 1, at step 8, the CPC station determines a period D during which the first Beacon message will be transmitted.

It is to be noted that said first Beacon message may be broadcasted in the geographical area, or transmitted to all the UEs present in said geographical area using a point-to-multipoint transmission or a point-to-point transmission.

At step 10, the CPC station get the Network frequencies availabilities and generates, at step 12, a second Beacon message for each mesh of the geographical area using said first Beacon messages and said Network frequencies availability.

Figure 3 illustrates an example of such second Beacon message generated for a mesh of said geographical area with regard to the first Beacon message of figure 2. This second Beacon message comprises a field 15 comprising an identifier of said mesh and a set of twelve successive fields each of them comprising a bit value '1' or '0'.

A value '1' in a field i, (i = 1 to 12) indicates to the UEs that the RAT or the frequency of the corresponding i^{th} field of the first Beacon message is present in the identified mesh.

A value '0' in a field i, (i = 1 to 12) indicates to the UEs that the RAT or the frequency of the corresponding i^{th} field of the first Beacon message is not present in the identified mesh.

Returning to figure 1, at step 14, the CPC station selects a transmission policy for said first and second Beacon messages.

The transmission policy is chosen so that a EU located in a given mesh of said geographic area reads the whole content of the first Beacon message only when the CPC station transmits the second Beacon message carrying information concerning the mesh on which said EU is camping.

In a first embodiment of the invention, said policy consists of indicating in a specific field of each first beacon message a parameter used by the UE (s) for identifying the mesh concerned by the data currently transmitted.

Said field comprises the geographical position of said mesh in the roaming area.

In another embodiment of the invention, field comprises a mesh identification number.

Moreover, each first beacon message comprise a identifying flag shared with a plurality of second beacon messages to allow a UE to discriminate between two different first beacon messages received in two contiguous meshes.

In a second embodiment of the invention, said policy consists of a transmission scheme pre-programmed in the EU to allow said UE to detect the transmission timing of the second beacon message containing data relating to the mesh where it is currently located.

In this second embodiment, the UE is programmed for detecting the transmission instant t_{c} of the second beacon message containing data relating to the mesh where it is currently located by comparing its current position with the position of a previous mesh concerned with a second beacon message previously transmitted.

In these first and second embodiments, each first beacon message comprises an indication of the geographical position of said area, an indication of the size of said area and an indication of the size of each mesh of said area to allow a UE camping on a mesh of said area to determine the transmission instant t_{c} of the second beacon message containing data relating to the mesh where it is currently located.

Figure 4 illustrates a first structure of a geographical area comprising eighty meshes, each mesh being identified by a reference number (1 to 80). The second Beacon messages are transmitted to said meshes from the upper left zone to the lower right zone following the order of increasing numbers of meshes (1, 2, 3...80).

In figure 5, illustrates a second structure of said geographical area in which the meshes are numbered from the center outward along a helical path. In this example, the second Beacon messages are transmitted to said meshes from the first mesh located at the center of the geographical area following the order of increasing numbers of meshes (1, 2, 3...80) according to the helical path..

Returning to figure 1, in step 16, the CPC station verifies whether the period of message transmission D is completed or not.

If said period is completed, the CPC station transmits, at step 18, the first Beacon messages using the selected transmission policy.

Else, the CPC station transmits, at step 20, the second Beacon messages with the meshes identifiers.

At step 22, the CPC station selects the next mesh according to the transmission policy and verifies, at step 24, whether all the second Beacon messages have been transmitted or not.

If so, the process continues from step 16.

Else, the CPC station verifies, at step 26, whether the transmission of the Beacon messages should stop or not.

If so, at step 28, the CPC station stops the transmission of the Beacon Messages.

Else, the CPC station verifies, at step 29 whether or not the structure (operators, RATS, frequencies...), of the geographical area has changed or not.

If so, the process continues from step 4.

Else, the process continues from step 10.

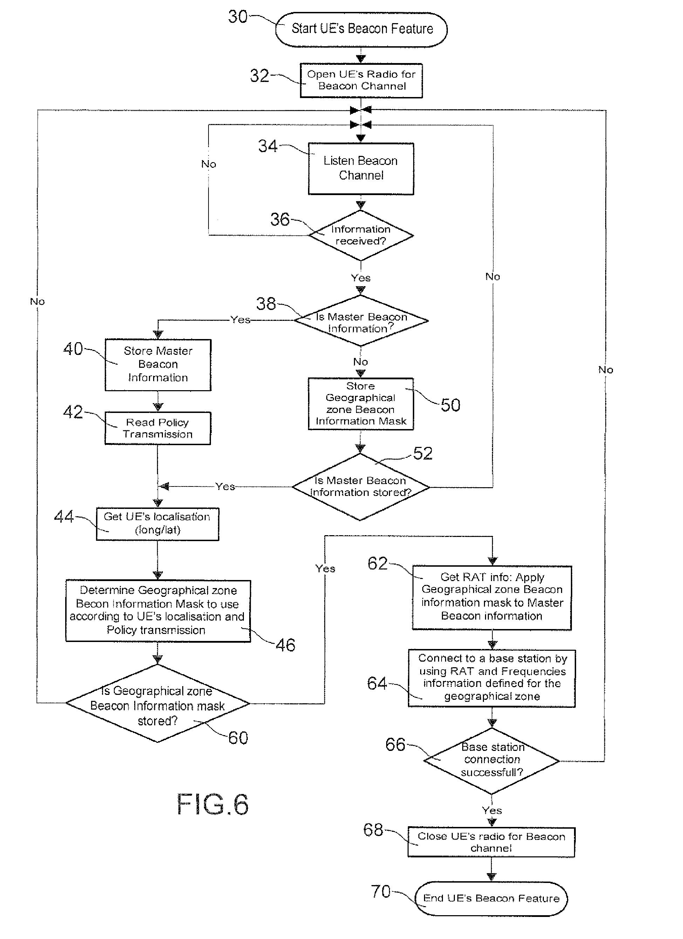

Figure 6 illustrates the processing of the Beacon messages by UEs roaming in the considered geographical area.

At step 30, the UE starts the CPC module.

At step 32 the UE configures the radio receiver for receiving the CPC channel.

At step 34, the UEs receive the information transmitted through the CPC channel.

At step 36, each UE roaming in the considered geographical area checks the headers of information packets received to determine whether said information consists of Beacon messages or not.

If so, at step 38, the UEs verify whether or not said Beacon messages comprises a first comprising identifier of operators, RATs or frequencies deployed in the geographical area or second Beacon messages comprising bits for selecting an operator, a RAT or a frequency deployed in the geographical area.

Else, the process continues from step 34.

If the received packets transport a first Beacon message, each UE stores said first Beacon message at step 40, reads the transmission policy at step 42, calculates its own position in the geographical area, at step 44, to determine the mesh where it is currently camping, and determines, at step 46, the second beacon message to use for selecting an operator, a RAT or a frequency deployed in its the geographical area.

If the received packets transport a second Beacon message, each UE stores said second Beacon message at step 50, and verifies , at step 52, whether the first Beacon message is already stored or not.

If no, the process continues from step 34.

If so, the process continues from step 44.

At step 60, each UE verifies whether its own position in the geographical area is already stored or not.

If no, the process continues from step 34.

If so, the process continues from step 62 in which the UE get the operators, the RATs and the frequencies identifiers from the first Beacon message and apply a logical operation between said identifiers and the bits of the second Beacon message in order to select one of the operators, the RATs and/or the frequencies actually deployed in the mesh where it is currently camping.

At step 64, the UE connects to a base station through the selected operator, RAT and/or the frequency.

At step 68, the UE verifies whether the connection succeeded or not.

If no, the process continues from step 34.

If so, the UE closes the radio communication through the Beacon channels at step 70, and stops the Beacon resources step 72.

## Claims

1. A method for optimally transmitting beacon services to User Equipments (UE's) (4) roaming in an area covered by several Radio Access Technologies (RAT's) using several frequencies, said area comprising a plurality of geographical zones, each zone being covered by at least one RAT among said plurality of RAT's and each User Equipment (UE) (4) having various RAT capabilities and preferences and supporting several frequencies,
said method **characterized by** the following steps:
- transmitting in said area first beacon messages comprising information about all the RAT's deployed in said area and about all the frequencies used in said area, and second beacon messages comprising data to be used by a UE in the geographical zone where it is located in order to select a particular RAT and/or a particular frequency actually available in said geographical zone,
- Upon receiving said first and said second beacon messages, said UE runs a predefined procedure using said beacon messages and the data of one of said second beacon messages to select said particular RAT and/or said particular frequency for receiving said broadcast services in the geographical zone where it is located.

2. A method according to claim 1 wherein said plurality of geographical zones consist of a plurality of meshes, and wherein said first beacon message and said second beacon message are transmitted over a CPC (Cognitive Pilot Channel) channel.

3. A method according to claim 2 wherein all the second beacon messages have the same size and wherein each of said first beacon messages and each of said second beacon messages comprises n successive fields, and wherein each field i (i= 1 to n) of each first beacon message contains an identifier of a particular RAT or a value of a particular frequency available in the area covered by the CPC channel, and each field i (i= 1 to n) of each second beacon message contains a data used to indicate to the UE located in a given mesh whether or not the i^{th} particular RAT or the i^{th} particular frequency is available in said given mesh.

4. A method according to claim 3 wherein the content of said first beacon messages depends on the RAT's deployed in said area and about all the frequencies used in said area, and the data of each field of said second beacon message depends on RAT's and frequencies available in different meshes, and wherein each first beacon message comprise a identifying flag shared with a plurality of second beacon messages to allow a UE to discriminate between several different first beacon messages.

5. A method according to claim 4 wherein said data consist of a bit.

6. A method according to claim 4 wherein each second beacon message comprises an indication of the geographical position of the mesh to which the data of said second beacon message are destinated.

7. A method according to claim 4 wherein each of said first beacon messages and each of said second beacon messages are transmitted according to a policy pre-programmed in said UE (s), and wherein a procedure is pre-programmed in the UE (s) for detecting the second beacon message containing data relating to the mesh where it is currently located, and wherein each first beacon message comprises an indication of the geographical position of said area, an indication of the size of said area and an indication of the size of each mesh of said area to allow a UE camping on a mesh of said area to determine the transmission instant t_{c} of the second beacon message containing data relating to the mesh where it is currently located.

8. A method according to claim 7 wherein all the meshes of said geographical area have the same shape and the same size.

9. A method according to claim 7 wherein said policy consists of indicating in a specific field of each first beacon message a parameter used by the UE (s) for identifying the mesh concerned by the data currently transmitted.

10. A method according to claim 7 wherein each second beacon message comprises an identification number of said mesh.

11. A method according to claim 7 wherein said procedure is a transmission scheme pre-programmed in the EU to allow said UE to detect the transmission timing of the second beacon message containing data relating to the mesh where it is currently located.

12. A method according to claim 11 wherein the UE detects the transmission instant t_{c} of the second beacon message containing data relating to the mesh where it is currently located by comparing its current position with the position of a mesh concerned with a second beacon message previously transmitted.

13. A method according to claim 6 or 10 wherein the UE equipment decodes the second beacon message containing data relating to the mesh where it is currently located, stores said data, and filters the content of the first beacon message by means of said data in order to select a new RAT and/or a new frequency in said mesh.

14. A base station for transmitting services to User Equipments (UE's) in an area covered by several Radio Access Technologies (RAT's) using several frequencies, said area comprising a plurality of geographical zones, each zone being covered by at least one RAT among said plurality of RAT's and each User Equipment (UE) having various RAT capabilities and preferences and supporting several frequencies.
said base station **characterized by**:
- means for transmitting in said area first beacon messages comprising information about all the RAT's deployed in said area and about all the frequencies used in said area, and second beacon messages comprising data to be used by a UE in the geographical zone where it is located in order to select a particular RAT and a particular frequency actually available in said geographical zone.

15. A User Equipment (4) having various RAT capabilities and preferences for receiving beacon services transmitted by a base station in an area covered by several Radio Access Technologies (RAT's) using several frequencies, said area comprising a plurality of geographical zones, each zone being covered by at least one RAT among said plurality of RAT's, said User Equipment (UE) (4) having various RAT capabilities and preferences and supporting several frequencies, UE **characterized by**:
- means for receiving first beacon messages and second beacon messages transmitted by said gateway and means for running a predefined procedure using the data of one of said second beacon messages to select said particular RAT and/or said particular frequency for receiving said broadcast services in the geographical zone where it is located.

16. A UE according to claim 15 further comprising means for running a predefined procedure for calculating transmission time of the second beacon message comprising data that allows selection of the particular RAT and/or the particular frequency deployed in the geographical zone where it is located.
